# EUROPEAN PATENT SPECIFICATION

(11) **EP 1 657 941 B1**
(45) Date of publication and mention of the grant of the patent: **05.03.2014**
(21) Application number: 05023035.8
(22) Date of filing: 21.10.2005
(51) Int. Cl.: H04L 29/08, H04M 1/725, H04N 21/414, H04N 21/61, H04W 88/02, H04W 92/08

(54) **Method for controlling a sub-device of mobile equipment using a SIM application toolkit**
Verfahren zur Steuerung einer untergeordneten Funktion eines Mobilgeräts mit Hilfe eines SIM Applikationen-Toolkits
Procédé de commande de sous-périphérique d'un équipement mobile au moyen des outils d'un module d'identification d'abonné (MIA)

(30) Priority: 11.11.2004 KR 2004091943
(43) Date of publication of application: 17.05.2006
(73) Proprietor: Samsung Electronics Co., Ltd., Suwon-si, Gyeonggi-do, 443-742 (KR)
(72) Inventor: Ju, Sang-Young, Yeongtong-gu Suwon-si Gyeonggi-do (KR)
(74) Representative: Grünecker, Kinkeldey, Stockmair & Schwanhäusser

(56) References cited:
- EP-A- 0 869 691
- WO-A-2004/086676
- FR-A- 2 800 228
- US-B1- 6 671 522
- "Digital cellular telecommunications system (Phase 2+); Universal Mobile Telecommunications System (UMTS); USIM Application Toolkit (USAT) (3GPP TS 31.111 version 3.8.0 Release 1999); ETSI TS 131 111" ETSI STANDARDS, EUROPEAN TELECOMMUNICATIONS STANDARDS INSTITUTE, SOPHIA-ANTIPO, FR, vol. 3-T3, no. V380, June 2002 (2002-06), XP014009740 ISSN: 0000-0001

## Description

The present invention relates to a control method of mobile equipment, and more particularly to a method for controlling a sub-device of mobile equipment ('ME'), which can control various sub-devices by use of an SAT allowing various interfaces to be performed between an SIM and the ME.

Generally, a Subscriber Identity Module ('SIM') Application Toolkit ('SAT') denotes series of commands and procedures used when a network operator provides its specific service to the users of mobile communication terminals. Further, the SAT functions as an interface for mutual communication between a SIM and an ME (Mobile Equipment excluding the SIM).

Such a SAT can be used only when both the SIM and the ME support the SAT. In a SAT section, the SIM transmits a processing command to the ME and starts communication with the user of a mobile communication terminal. A command for operating the SAT, such as a 3GPP TS 31.111 USIM Application Toolkit (USAT) and a 3GPP TS 11.14 Specification of the SIM Application Toolkit for the Subscriber Identity Module-Mobile Equipment (SIM-ME) interface, includes a proactive command from an SIM to an ME and an Envelope command from an ME to a SIM.

Specifically, the conventional proactive command includes Display Text, Get Inkey, Get Input, More Time, Play Tone, Poll Interval, Refresh, Set Up Menu, Select Item, Send Short Message (SM), Send Supplementary Service (SS), Send Unstructured Supplementary Services Data (USSD), Set Up Call, Polling Off, Provide Local Information, Set Up Even List, Perform Card Application Protocol Data Unit (APDU), Power Off Card, Power On Card, Get Reader Status, Timer Management, Set Up Idle Mode Text, Run At Command, Send Dual Tone MultiFrequency (DTMF), Language Notification, Launch Browser, Open Channel, Close Channel, Send Data, Get Channel Status, Service Search, Get Service Information, Declare Service, etc. Further, the Envelope command includes Data download to SIM, Menu Selection, Call Control by SIM, Timer Expiration, Event Download, etc.

Carriers combine such commands with each other and transmit/receive the combined commands through a Short Message Service (SMS) to provide specific information services. Carriers usually develop their own specific services such as connection of a call to a specific service number through the combination of the commands and provide SIM Applications. Mobile communication, user terminals have developed into multi-function mobile composite devices. Some designs attach various sub-devices [e.g., MP3 players, dynamic image (e.g., MPEG4) recorders/reproducers, digital cameras, identification apparatuses for an E-commerce] to the basic mobile communication terminal.

Accordingly, it is necessary to control various Sub-device Modules (e.g., Key Pads, LCDs, Speakers, Digital Cameras, Dynamic Image Players, MP3 Players, IrDas, BlueTooths, TV receivers, Multi-Media Cards, Radio receivers, etc.) provided to 3G terminals as well as future composite devices.

As described above, since interface protocols between the SIM and the ME are not described in the conventional 3GPP specification, there is a limitation in using the SAT for user terminals. In other words, the prior art has only a monotonous interface using commands such as Display Text, Get Inkey, Get Input, Play Tone, etc., between the SIM and the ME.

FR 2800 228 A refers to a system and method to control a third item of equipment using a SIM card, via a radio communication module. In detail, this document describes a radio communication module which cooperates with a SIM card in the form of at least one first SIM application toolkit dialogue. Furthermore, the module also cooperates with a third item of equipment and comprises means to convert the first dialogue between the SIM card and the module into a second dialogue between the module and the third item of equipment, such that the SIM card controls the third item of equipment via the module. It also outlines that known solutions involve the major drawback of not enabling a SIM card to use the SIM application toolkit to control a third item of equipment via a radio communication module. In particular, FR 2800 228 A refers to a proactive SIM mechanism, enabling the SIM card to request the terminal to execute certain actions, such as in particular menu display, display of a given text, retrieval of user input, short message transmission, playing a requested tone, setting up a call, provision of location information, etc.

EP 0 869 691 A refers to a GSM mobile radio apparatus, which can be controlled by the network and in particular, to a GSM mobile radio device which has an external component circuit allowing the functionality of the device to be controlled via the GSM network and providing at least one additional function for the GSM mobile radio device. A proactive SIM application toolkit is incorporated in the GSM mobile radio device for initiating and controlling the additional function. The SIM application toolkit may act as a gateway between the external component circuit and the GSM mobile radio device/GSM network.

Accordingly, the present invention has been made to solve the above-mentioned problems occurring in the prior art.

It is the object of the present invention to provide a more efficient system and method for controlling a sub-device of a mobile equipment by means of a SIM application toolkit.

This object is solved by the subject matter of the independent claims.

Preferred embodiments are defined in the dependent claims.

In accordance with one aspect of the present invention, there is provided a method for controlling a sub-device of a mobile equipment (ME) by means of a subscriber identity module (SIM) application toolkit (SAT), the method including the steps of coding by a subscriber identity module (SIM) information for controlling the sub-device of the mobile equipment according to a predetermined format and transmitting a proactive command to the mobile equipment; determining by the mobile equipment whether or not the proactive command is a command for controlling the sub-device in response to transmission of the proactive command; and analyzing by the mobile equipment the proactive command and operating the sub-device according to a result obtained by analyzing the proactive command, when the proactive command is the command for controlling the sub-device.

The present invention will be more apparent from the following detailed description taken in conjunction with the accompanying drawings, in which:
FIG. 1 is a flow diagram illustrating transmission flow of one command of proactive commands transmitted from a SIM and an ME according to an embodiment of the present invention;
FIG. 2A is a diagram illustrating the structure of a proactive command according to an embodiment of the present invention;
FIG. 2B is a diagram illustrating further detail of a command details of the proactive command in FIG. 2A;
FIG. 2C is a diagram illustrating further detail of a device identity of the proactive command in FIG. 2A;
FIG. 3 is a diagram illustrating the structure of an envelope command according to an embodiment of the present invention;
FIG. 4A is a diagram illustrating the structure of a proactive command including mandatory elements according to an embodiment of the present invention;
FIG. 4B is a diagram illustrating further detail of the structure of command details for the proactive command in FIG. 4A;
FIG. 4C is a diagram illustrating in detail the structure of a device identity of the proactive command in FIG. 4A;
FIG. 5 is a diagram illustrating a coding format of a command for turning on/off a TV receiver according to an embodiment of the present invention;
FIG. 6 is a diagram illustrating a coding format of a command for switching TV channels according to an embodiment of the present invention;
FIG. 7 is a diagram illustrating a coding format of a command for performing a record/stop in a dynamic image player according to an embodiment of the present invention;
FIG. 8 is a diagram illustrating a coding format of a command for turning off a dynamic image player according to an embodiment of the present invention; and
FIG. 9 is a flow diagram illustrating transmission flow of a command signal for recording a TV broadcast according to an embodiment of the present invention.

Hereinafter, a preferred embodiment according to the present invention will be described with reference to the accompanying drawings. In the following description of the present invention, a detailed description of known functions and configuration incorporated herein will be omitted when it may make the subject matter of the present invention unclear.

In the present invention, various interface functions are provided between an ME and a SIM supporting a SAT. For this, the present invention provides a combination of commands enabling easy control of a sub-device attached to an ME by use of a SAT.

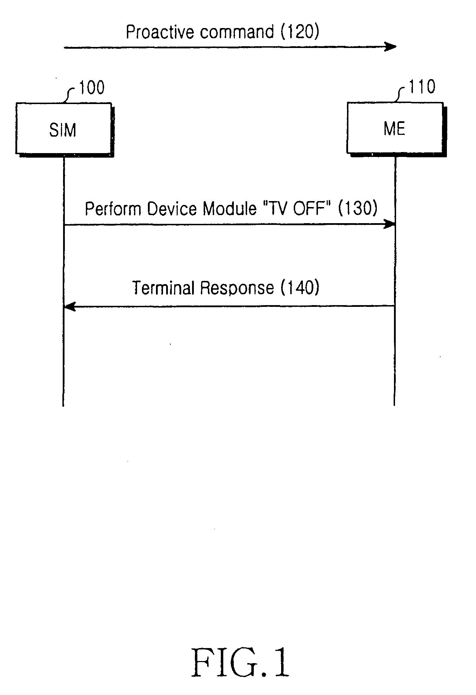

Hereinafter, flow of command transmission between a SIM and an ME will be described with reference to FIG. 1. FIG. 1 is a flow diagram illustrating the flow of the command transmission using a SAT between the SIM and the ME according to the present invention. As shown in FIG. 1, in providing a command for controlling a sub-device attached to the ME, a case in which the SIM 100 transmits a proactive command 120 to the ME 110 will be described.

For instance, when the SIM 100 transmits a command for "TV OFF" 130 to the ME 110, the ME 110 transmits a Terminal Response 140 corresponding to the transmitted command to the SIM 100. Specifically, the SIM 100 determines whether or not information should be transmitted to the ME 110. If there is, the SIM 100 permits transmission of a corresponding command. When the command transmitted from the SIM 100 arrives at the ME 110, the ME 110 analyzes the information contained in the corresponding command. If the received command is "TV OFF", the ME 110 controls the power of a corresponding device module (i.e., TV module) to be turned off. In this way, a response from the ME 110 to the SIM 100 is accomplished.

The command signal of the SAT includes the proactive command transmitted from the SIM 100 to the ME 110 and an envelope command transmitted from the ME 110 to the SIM 100. Each command signal has a TLV structure where T is a Tag for representing the type of a command, L is a Length representing the length of the command, and V is a Value containing actual information for executing the command.

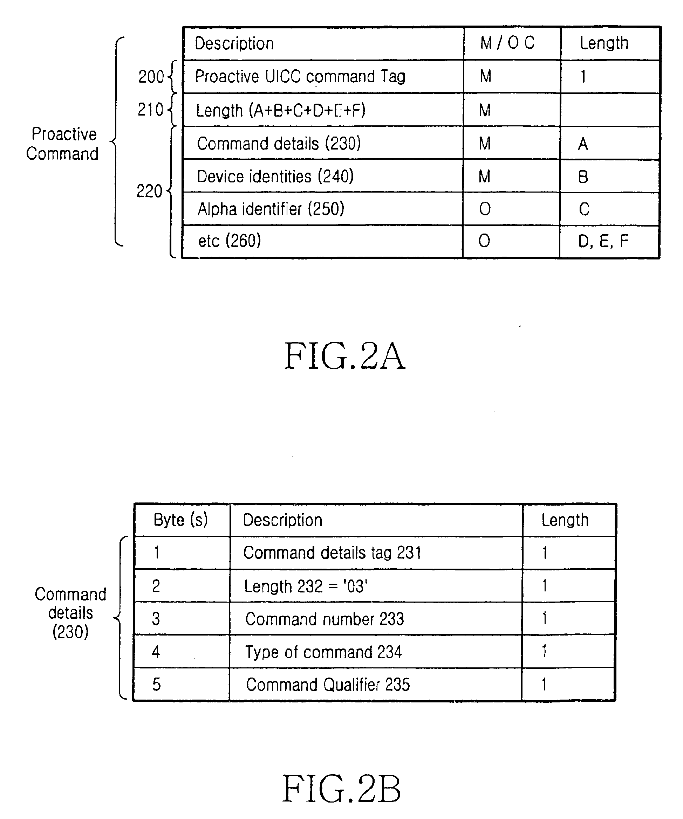

In the TLV structure for the command of the SAT, the proactive command, from the SIM 100 to the ME 110 has the structure as shown in FIG. 2A. FIG. 2A is a diagram showing the structure of the proactive command according to an embodiment of the present invention. The ME 110 determines whether or not a command is the proactive command from the SIM 100 through a "proactive Universal Integrated Circuit Card (UICC) command tag" 200. The proactive command includes a detail command 220 (i.e., "Command details" 230, "Device identities" 240, "Alpha identifier" 150, etc. 260) of the command and a "Length" 210 representing the length of the detailed command 220.

Specifically, the proactive command includes the one bit "proactive UICC command tag" 200 having command number information, a predetermined bit "Length" A+B+C+D+E+F 210 corresponding to length information of the detail command, A bit "Command details" 230 having the detail information of the command, B bit "Device identities" 240 representing the device numbers of a source and a destination, a C bit "Alpha identifier" 250 for indicating the execution state of the command as a character, etc (D bit, E bit, F bit).

The command in FIG. 2A includes the "proactive UICC command tag" 200, the "Length" 210, the "Command details" 230, the "Device identities" 240 which are mandatory elements and the "Alpha identifier" 250, etc. 260, which are optional elements.

The "Command details" 230 of the detail command 220 will now be described. As shown in FIG. 2B, the "Command details" 230 has a length of five bytes. The first byte is a "Command details tag" 231 representing a detail command for the "Command details" 230 and has a length of one byte. The second byte length 232 represents the sum of the lengths of the third to the fifth detail information element ("Command number" 233, "Type of command" 234 and "Command Qualifier" 235), which each have a length of one byte.

Further, the third to the fifth byte are the "Command number" 233, the "Type of command" 234 and the "Command Qualifier" 235, respectively. The "Command number" 233 represents identification numbers used for distinguishing the SIM processing commands (i.e., proactive commands) from each other when the proactive commands are simultaneously transmitted. The "Type of command" 234 represents the type of a command ordering a predetermined operation. The "Command Qualifier" 235 represents qualification, such as an operation sequence.

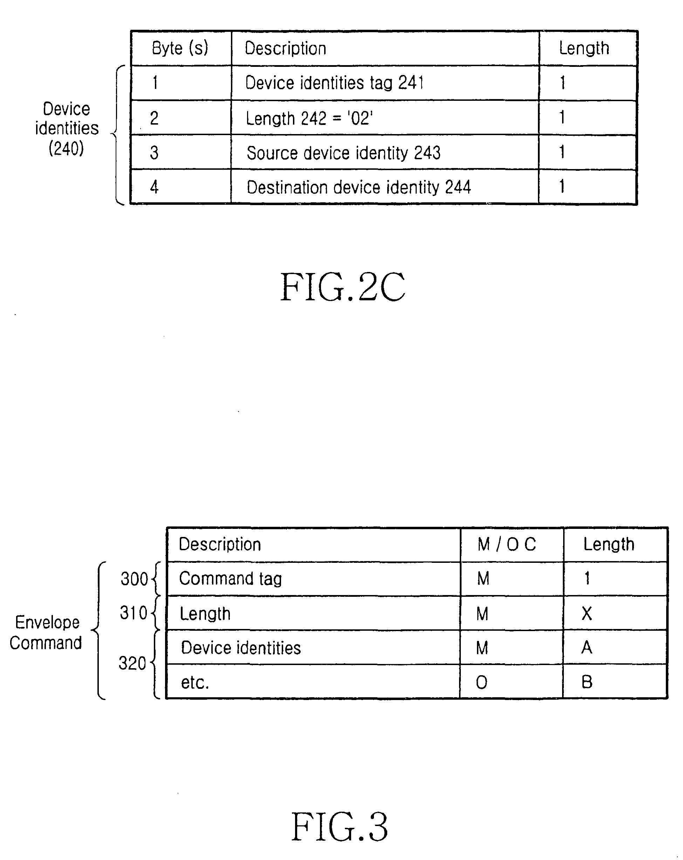

Hereinafter, the "Device identities" 240 of the detail command 220 will now be described. As shown in FIG. 2C, the "Device identities" 240 has a length of total four bytes. The first byte of the four bytes is a "Device identities tag" 241 representing a detail command for the "Device identities" and has a length of one byte. The second byte represents the sum of the lengths of the third and the fourth signal element ("Source device identity" 243 and "Destination device identity" 244), which each have a length of one byte. The third byte is the "Source device identity" 243 representing source information enabling the proactive command to be transmitted to a corresponding device and the fifth byte is the "Destination device identity" 244 representing identification numbers for the corresponding device to operate.

As Band 2C. The envelope command from the ME 110 to the SIM 100 has the construction as shown in FIG. 3 and includes a "Command tag" 300, a "Length" 310 and a detail command ("Device identities", etc.) 320.

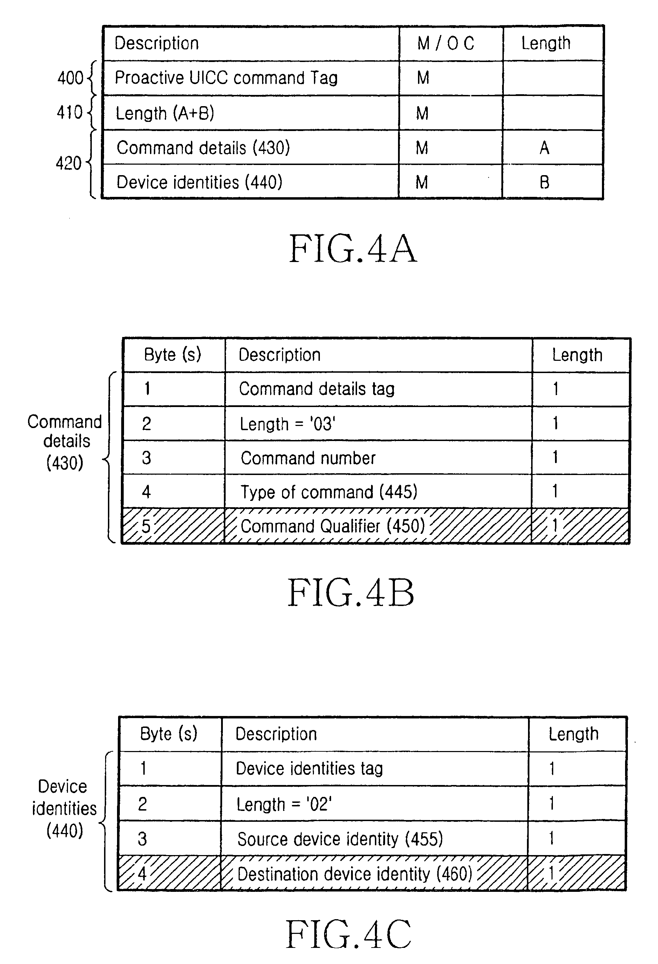

The command constructed as described above may be reconstructed as follows to detain a command for enabling the SIM to operate a sub-device of the ME. As shown in FIG.4A, the proactive command according to an embodiment of the present invention includes a "proactive UICC command tag" 400, a "Length" 410, and detail commands 420 ("Command details" 430 and "Device identities" 440). Herein, the "Length" 410 is the sum (A+B) of the detail command lengths.

Hereinafter, the "Command details" 430 of the detail commands 420 are described. The "Command details" 430 has a total length of five bytes as shown in FIG.4B. Operations for in a sub-device are identified according to code values set in the "Command Qualifier" 450. Code values as shown in Table 1 may be set in the "Command Qualifier" 450. Further, code values without a designated corresponding operations, such as '0E' to 'FF' representing a reserved region, may be assigned to operations one by one, which can be performed in the sub-device afterwards, and then may be set in the "Command Qualifier" 450.

**Table 1**

| | |
|---|---|
| '00' = | POWER ON |
| '01' = | POWER OFF |
| '02' = | PLAY |
| '03' = | STOP |
| '04' = | RECORD |
| '05' = | REWIND FORWARD |
| '06' = | REWIND BACKWARD |
| '07'= | AUTO SCROLL |
| '08'= | ACTIVATION |
| '09' = | DEACTIVATION |
| '0A' = | SHUT ON |
| '0B' = | SHUT OFF |
| '0C' = | INCREASE |
| '0D' = | DECREASE |
| '0E' to 'FF' = | RESERVED FOR FUTURE USE |

For example, referring to Table 1, when the code value '01' is set in the "Command Qualifier" 450, the code value '01' denotes "POWER OFF". To control a reproduction operation in the sub-device of the ME, the code value '02' may be set in the "Command Qualifier" 450. Further, a code value '50' may be set in a "Type of command" 445 to denote a "PERFORM DEVICE MODULE".

Hereinafter, the "Device identities" 440 will now be described. The "Device identities" 440 has a length of four bytes as shown in FIG. 4C. Corresponding sub-devices are differentiated according to code values set in the "Destination device identity" 460. Exemplary code values for each sub-device are as shown in Table 2.

**Table 2**

| | |
|---|---|
| '31' = | MP3 PLAYER |
| '32' = | MPEG4 dynamic image PLAYER |
| '33' = | TV receiver |
| '34' = | Radio receiver |
| '35' = | IrDa |
| '36' = | BlueTooth |
| '37' = | Digital Camera |
| '38' = | Speaker |
| '39' = | Main LCD |
| '3A' = | Sub LCD |
| '3B' = | LED |
| '3C' to 'FF' = | reserved for future use |

Referring to Table 2, when the code value '34' is set in "Destination device identity" 460, the code value '34' indicates control for the radio receiver. Accordingly, when a user wants to operate a desired device with a SAT function, a code value corresponding to the desired corresponding device is set in the "Destination device identity 460. The "Source device identity" 455 denotes a source including the corresponding device. For example, when a camera is mounted on the ME, the third and the fourth byte have a value of '8137'. Herein, '81' means that a command is transmitted to the camera in the ME and '37' means that the device to operate is the digital camera.

When each command name PERFORM DEVICE MODULE is used for the same purpose, the name can be replaced with other names. When more detailed information is required according to the characteristics of a device used in the ME, a separate command portion may be added or deleted.

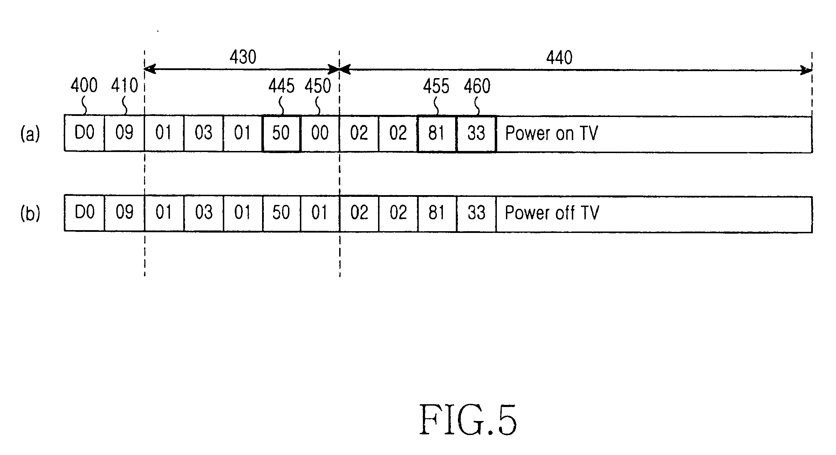

Hereinafter, the invention will be described in further detail with reference to FIGs. 5 to 8. First, it is assumed that the ME includes not only a TV reception function, and a dynamic image Player function capable of reproducing and recording received images.

When a user wants to automatically record TV broadcasting at a desired time, the SIM provides the ME with commands for turning on a TV receiver, selecting a desired channel, recording the TV broadcasting through a dynamic image Player, and for stopping the operation of the dynamic image Player.

First, since the TV receiver should be powered on to record the TV broadcasting, the SIM transmits the command for turning on the TV receiver to the ME. Preferably, the transmitted command has a structure as shown in FIG. 5. FIG. 5 is a diagram showing the structure of a command for turning on/off the TV receiver according to an embodiment of the present invention. The command for turning on the TV receiver has the structure including a TLV format, that is, a tag, a length and a value. First, referring to FIG. 5 in order to describe the structure of the command for turning on the TV receiver, the tag is designated by reference number 400, the length is designated by reference number 410, and the value is designated by reference numbers 430 and 440.

Specifically, in the command for turning on the TV receiver, a code value 'DO' is set in the "proactive UICC command tag", 400 meaning that the command for turning on the TV receiver is a command from the SIM. Further, the sum of an entire length of the detail commands 430 and 440 is set in the length 410. That is, the sum (9 bytes) of the entire length of the "Command details" 430 (5 bytes) and the "Device identities" 440 (4 bytes) is set in the length 410.

The 'Command details' 430 is divided into a tag, a length and a value. A code value '01' is set in the tag, and a code value '03' (3 bytes), that is, remaining bytes excluding the tag and the length from the total of 5 bytes, is set in the length. A code value '50' representing a device operation is set in the "Type of command" 445 , and a code value '00' representing a power on is set in the 'Command Qualifier' 450.

The "Device identities" 440 is divided into a tag, a length and a value as well. A code value '02' reporting a start portion of a device identities command is set in the tag, and a code value '02' (2 bytes), that is, remaining bytes excluding the tag and the length from the 4 bytes total is set in the length. Further, a code value '81' for allowing the command to be transmitted to a corresponding device in the ME is set in the 'Source device identity' 455, and a code value '33' indicating that the corresponding device is the TV receiver is set in the 'Destination device identity' 460.

In the command for turning off the TV receiver, a code value '01' representing a power off is set in the 'Command Qualifier' 450. The other values are set like the command structure as shown in FIG. 5.

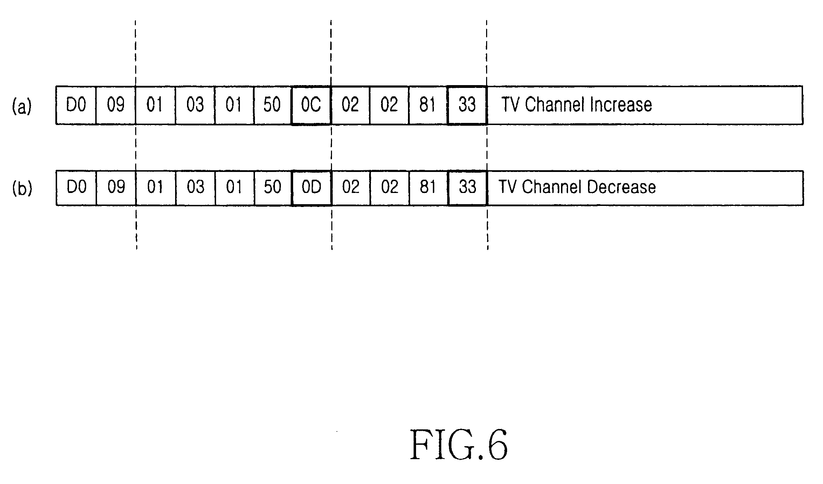

When the command as shown in FIG. 5 is transmitted, the TV receiver is powered on. Then, a TV channel selection is accomplished for recording desired broadcasting. For the recording, the SIM transmits a command for a TV channel setting as shown in FIG. 6 to the ME. As shown in FIG. 6, a code value '0C' representing the performance of an increase operation by the ME is set in the "Command Qualifier" 450, and a code value '33' representing a TV is set in the "Destination device identity" 460. That is, the structure of the command shown in FIG. 6 means a command selecting the next higher TV channel. In contrast, to select lower-numbered TV channels, a code value '0D' is set in the 'Destination device identity' 460.

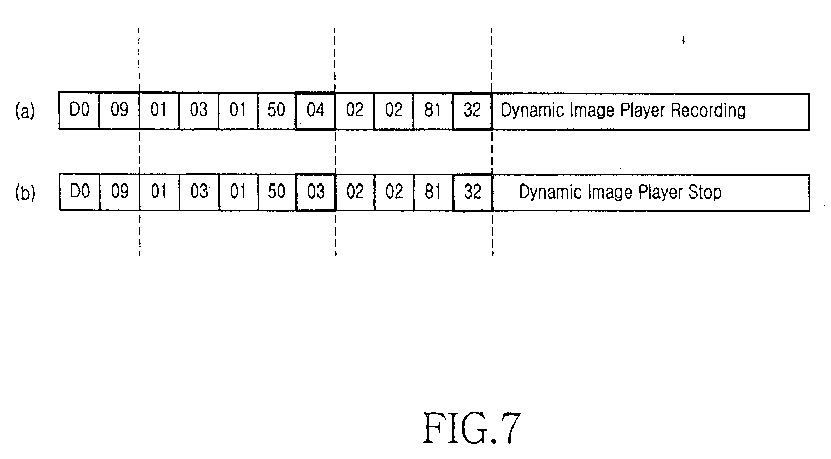

After setting the TV channel a recording function is started. Accordingly, a command as shown in FIG. 7, which enables the recording function of the dynamic image player to be performed, is transmitted from the SIM to the ME. As shown in FIG. 7, a code value '04' representing the recording performance is set in the "Command Qualifier" 450, and a code value '32' representing the dynamic image player is set in the "Destination device identity" 460 as a code value for a corresponding device. To stop recording of the dynamic image player, a code value '03' for stop is set in the "Command Qualifier" 450. Further, after the TV broadcasting recording has been completed, it is usually desired to turn the dynamic image player off.

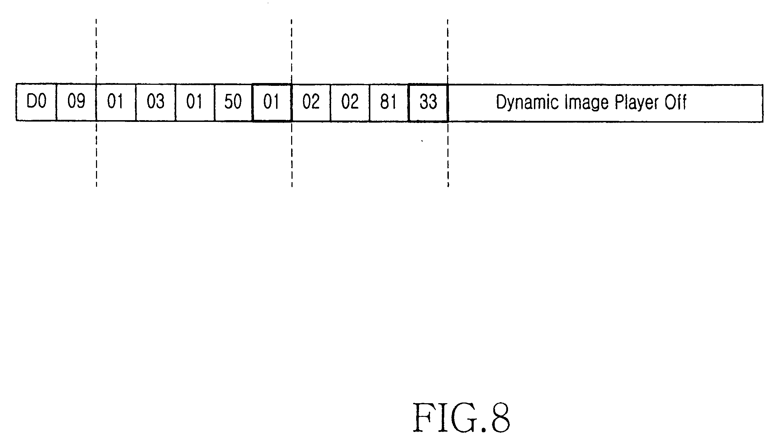

Accordingly, as shown in FIG. 8, a code value '01' is set in the "Command Qualifier" 450 to perform the power off operation. Further, a code value '33' is set in the "Destination device identity" 460 to indicate that the device to be tumed-off is the dynamic image player.

As described above, the SIM controls a sub-device of the ME via the SAT by transmitting, a corresponding command to the ME. To do so, the SIM first encodes information for controlling the sub-device according to the coding method described above and transmits the Proactive Command to the ME. At the receiving end, the ME determines whether or not the received corresponds Proactive Command is a command for controlling the sub-device. To do so, the ME determines whether a "proactive UICC command tag" is the Proactive Command is included. If it is, it indicates that the received command includes information for controlling the sub-device, and the ME performs a process of analyzing the detail command of the Proactive Command according to the received information.

Analysis of the detail command is as follows. First, the ME determines whether a 'Command details Tag' is input or not. As a result of the determination, when the 'Command details Tag' is input, the ME recognizes that control information for the sub-device is contained in the Proactive Command and deciphers the detail information elements for the control information.

Then, the ME determines whether a "Device identities tag" is input or not. As a result of the determination, when the "Device identities tag" is input, the ME recognizes that detail information for the sub-device to operate is contained in the Proactive Command and deciphers detail information elements for a Device identities portion. In this way, the ME analyzes the received Proactive Command. Further, the ME operates the corresponding sub-device according to the control contents based on the analyzed result.

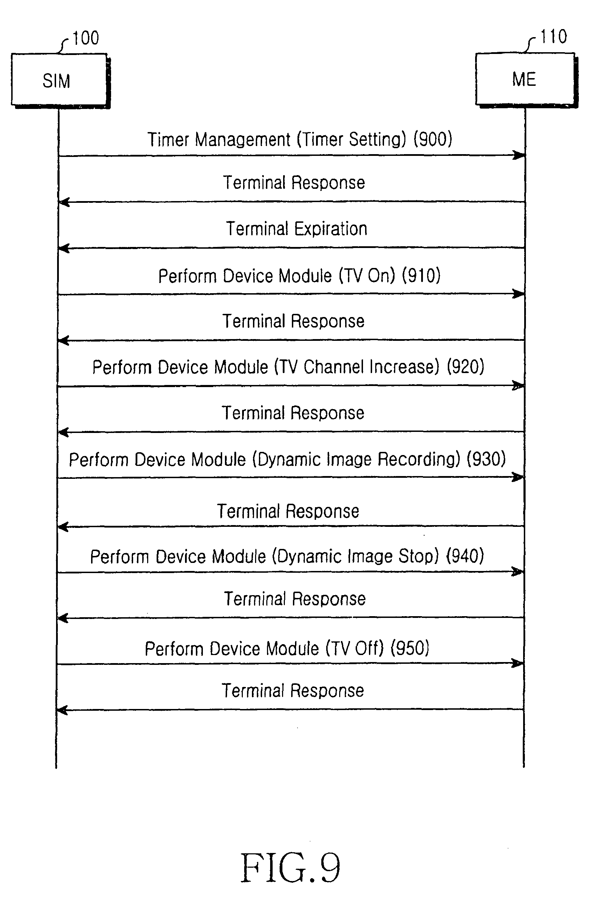

For a more detailed description of the above process, a case of recording a TV broadcast will be described as an example. When the TV broadcasting is recorded, the transmission flow of a corresponding command signal in each step is as shown in FIG. 9. FIG. 9 is a flow diagram illustrating the transmission flow of each command signal for recording the TV broadcasting according to an embodiment of the present invention.

As shown in FIG. 9, to record the TV broadcast, it is first suggested to set a timer for setting a current time. Accordingly, in step 900, the SIM 100 transmits a Timer Management command, which is a command for timer setting, to the ME 110. Herein, the command for timer setting has a structure coded according to the existing coding method. Then, when the timer operates, the SIM 100 transmits the command for turning on the TV receiver, which is coded as shown in FIG. 5A, to the ME 110 in step 910. When the TV receiver is powered on, the SIM 100 transmits a command to set the TV to the desired channel to the ME, in step 920.

After the corresponding channel is set, the SIM 100 transmits a recording command, which enables a dynamic image player to operate and actually record the broadcast, to the ME 110 in step 930. Then, the ME 110 performs a recording function for the broadcast until the ME 110 receives the command for stopping the function of the dynamic image player from the SIM 100, in step 940.

The SIM 100 then transmits a command for turning off the power of the TV to the ME 110 in step 950 when the TV broadcast recording is completed.

As described above, according to the present invention, a mobile communication terminal includes various sub-devices having a plurality of composite functions with a SAT, so that it is possible to provide a function allowing a SIM to directly control each device of an ME. Further, according to the present invention, it is possible to realize various SAT functions. In other words, it is possible to provide various interfaces between an ME and a SIM supporting a SAT.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A method for controlling a sub-device of a mobile equipment (110) by means of an SIM application toolkit, the method comprising the steps of:
a) coding by an SIM (100) information for controlling the sub-device of the mobile equipment according to a predetermined format and transmitting (120) a proactive command to the mobile equipment;
b) determining by the mobile equipment whether the proactive command is a command for controlling the sub-device in response to transmission of the proactive command; and
c) analyzing by the mobile equipment the proactive command and operating the sub-device according to a result obtained by analyzing the proactive command, when the proactive command is the command for controlling the sub-device,
wherein the proactive command includes a proactive UICC command tag (400), a length (410), command details (430) and device identities (440), the command details including:
a command details tag representing a detail command for the command details of the proactive command;
a command number representing identification numbers used for distinguishing proactive commands when the proactive commands are simultaneously transmitted;
a type of command (445) including a code value representing an operation of a sub-device;
a command qualifier (450) assigning qualification for an operation sequence, the command qualifier including a code value for distinguishing operations performed in a sub-device of the mobile equipment; and
a length representing a sum of lengths of the command number, the type of command and the command qualifier.

2. The method as claimed in claim 1, wherein step b) comprises the steps of:
b1) inputting a proactive UICC command tag (400) reporting that the command is the proactive command;
b2) understanding information for controlling the sub-device from the command when the proactive UICC command tag is input; and
b3) analyzing detail command of the proactive command according to the understood information when the command is the command for controlling the sub-device.

3. The method as claimed in claim 2, wherein step b2) comprises the steps of:
inputting a command details tag of the detail command; and
understanding detail information elements for control information for the sub-device when the command details tag is input.

4. The method as claimed in claim 2, wherein step b2) comprises the steps of:
inputting a device identities tag of the detail command; and
understanding detail information elements for the sub-device to operate when the device identities tag is input.

5. The method as claimed in claim 1, wherein the proactive command includes a proactive UICC command tag (400) reporting that the command received in the mobile equipment is a command from the SIM, a detail command of the command, and a length (410) representing a length of the detail command.

6. The method as claimed in claim 5, wherein the detail command includes command details (430) and device identities (440).

7. The method as claimed in claim 1, wherein the device identities (440) include:
a device identities tag representing a detail command for the device identities;
a source device identity (455) representing source information enabling the proactive command to be transmitted to a corresponding device;
a destination device identity (460) representing identification numbers for the corresponding device to operate; and
a length representing a sum of lengths of the source device identity and the destination device identity.

8. The method as claimed in claim 1, wherein the command qualifier (450) includes one of:
a code value representing a Power-on of the sub-device;
a code value representing a Power-off of the sub-device;
a code value representing a Play of the sub-device;
a code value representing a Stop of the sub-device;
a code value representing a Record of the sub-device;
a code value representing a Rewind Forward of the sub-device;
a code value representing a Rewind Backward of the sub-device;
a code value representing an Auto Scroll of the sub-device;
a code value representing an Activation of the sub-device;
a code value representing a Deactivation of the sub-device;
a code value representing a Shut-On of the sub-device;
a code value representing a Shut-Off of the sub-device;
a code value representing an Increase of the sub-device; and,
a code value representing a Decrease of the sub-device.

9. The method as claimed in claim 1, wherein the command qualifier (450) includes one of code values '0E to 'FF' representing a reserved region as a code value for an operation performed in the sub-device.

10. The method as claimed in claim 1, wherein the code value representing an operation of the sub-device is '50'.

11. The method as claimed in claim 7, wherein the destination device identity (460) includes one of:
a code value representing an MP3 Player;
a code value representing an MPEG4 dynamic image Player;
a code value representing a TV receiver;
a code value representing an Radio receiver;
a code value representing an IrDa;
a code value representing a BlueTooth;
a code value representing a Digital Camera;
a code value representing a Speaker;
a code value representing a Main LCD;
a code value representing a Sub-LCD; and,
a code value representing an LED.

12. A system comprising an SIM (100) in communication with a mobile equipment (110), the mobile equipment having a sub-device, wherein:
the SIM is adapted to code information for controlling the sub-device of the mobile equipment according to a predetermined format and to transmit (120) a proactive command to the mobile equipment,
the mobile equipment is adapted to determine whether the proactive command is a command for controlling the sub-device in response to transmission of the proactive command,
the mobile equipment is further adapted to analyze the proactive command and to operate the sub-device according to a result obtained by analyzing the proactive command, when the proactive command is the command for controlling the sub-device, and
wherein the proactive command includes a proactive UICC command tag (400), a length (410), command details (430) and device identities (440), the command details including:
a command details tag representing a detail command for the command details of the proactive command;
a command number representing identification numbers used for distinguishing proactive commands when the proactive commands are simultaneously transmitted;
a type of command (445) including a code value representing an operation of a sub-device;
a command qualifier (450) assigning qualification for an operation sequence, the command qualifier including a code value for distinguishing operations performed in a sub-device of the mobile equipment; and
a length representing a sum of lengths of the command number, the type of command and the command qualifier.

## Patentansprüche

1. Verfahren zum Steuern einer Teilvorrichtung eines Mobilgerätes (110) mit Hilfe eines SIM-Applikations-Toolkits, wobei das Verfahren folgende Schritte umfasst:
a) Codieren, durch ein SIM (100), von Informationen zum Steuern der Teilvorrichtung des Mobilgerätes gemäß einem vorbestimmten Format und Senden (120) eines proaktiven Befehls zu dem Mobilgerät;
b) Bestimmen, durch das Mobilgerät, ob der proaktive Befehl ein Befehl zum Steuern der Teilvorrichtung ist, in Erwiderung auf die Sendung des proaktiven Befehls; und
c) Analysieren, durch das Mobilgerät, des proaktiven Befehls und Betreiben der Teilvorrichtung gemäß einem Ergebnis, das man durch Analysieren des proaktiven Befehls erhält, wenn der proaktive Befehl der Befehl zum Steuern der Teilvorrichtung ist,
wobei der proaktive Befehl ein proaktives UICC-Befehlskennzeichen (400), eine Länge (410), Befehlsdetails (430) und Vorrichtungsidentitäten (440) umfasst, wobei die Befehlsdetails umfassen:
ein Befehlsdetailkennzeichen, das einen Detailbefehl für die Befehlsdetails des proaktiven Befehls repräsentiert;
eine Befehlszahl, die Identifikationszahlen repräsentiert, die für die Unterscheidung proaktiver Befehle verwendet werden, wenn die proaktiven Befehle gleichzeitig gesendet werden;
einen Befehlstyp (445), der einen Codewert enthält, der eine Tätigkeit einer Teilvorrichtung repräsentiert;
einen Befehlsqualifizierer (450), der eine Qualifikation für eine Tätigkeitssequenz zuweist, wobei der Befehlsqualifizierer einen Codewert zum Unterscheiden von Tätigkeiten enthält, die in einer Teilvorrichtung des Mobilgerätes ausgeführt werden; und
eine Länge, die eine Summe von Längen der Befehlszahl, den Befehlstyp und den Befehlsqualifizierer repräsentiert.

2. Verfahren nach Anspruch 1, bei dem der Schritt b) folgende Schritte umfasst:
b1) Eingeben eines proaktiven UICC-Befehlskennzeichens (400), das darüber Auskunft gibt, dass der Befehl der proaktive Befehl ist;
b2) Erkennen von Informationen zum Steuern der Teilvorrichtung aus dem Befehl, wenn das proaktive UICC-Befehlskennzeichen eingegeben wird; und
b3) Analysieren des Detailbefehls des proaktiven Befehls gemäß den erkannten Informationen, wenn der Befehl der Befehl zum Steuern der Teilvorrichtung ist.

3. Verfahren nach Anspruch 2, bei dem der Schritt b2) folgende Schritte umfasst:
Eingeben eines Befehlsdetailkennzeichens; und
Erkennen von Detailinformationselementen für Steuerinformationen für die Teilvorrichtung, wenn das Befehlsdetailkennzeichen eingegeben wird.

4. Verfahren nach Anspruch 2, bei dem der Schritt b2) folgende Schritte umfasst:
Eingeben eines Vorrichtungsidentitätskennzeichens des Detailbefehls; und
Erkennen von Detailinformationselementen für den Betrieb der Teilvorrichtung, wenn das Vorrichtungsidentitätskennzeichen eingegeben wird.

5. Verfahren nach Anspruch 1, bei dem der proaktive Befehl ein proaktives UICC-Befehlskennzeichen (400) umfasst, das darüber Auskunft gibt, dass der Befehl, der in dem Mobilgerät empfangen wird, ein Befehl von dem SIM, ein Detailbefehl des Befehls und eine Länge (410) ist, die eine Länge des Detailbefehls repräsentiert.

6. Verfahren nach Anspruch 5, bei dem der Detailbefehl Befehlsdetails (430) und Vorrichtungsidentitäten (440) umfasst.

7. Verfahren nach Anspruch 1, bei dem die Vorrichtungsidentitäten (440) umfassen:
ein Vorrichtungsidentitätskennzeichen, das einen Detailbefehl für die Vorrichtungsidentitäten repräsentiert;
eine Ursprungsvorrichtungsidentität (455), die Ursprungsinformationen repräsentiert, die es ermöglichen, dass der proaktive Befehl zu einer entsprechenden Vorrichtung gesendet wird;
eine Bestimmungsvorrichtungsidentität (460), die Identifikationszahlen für den Betrieb der entsprechenden Vorrichtung repräsentiert; und
eine Länge, die eine Summe von Längen der Ursprungsvorrichtungsidentität und der Bestimmungsvorrichtungsidentität repräsentiert.

8. Verfahren nach Anspruch 1, bei dem der Befehlsqualifizierer (450) einen der folgenden Codewerte umfasst:
einen Codewert, der ein Einschalten der Teilvorrichtung repräsentiert;
einen Codewert, der ein Ausschalten der Teilvorrichtung repräsentiert;
einen Codewert, der ein Abspielen der Teilvorrichtung repräsentiert;
einen Codewert, der ein Stoppen der Teilvorrichtung repräsentiert;
einen Codewert, der ein Aufzeichnen der Teilvorrichtung repräsentiert;
einen Codewert, der einen Vorlauf der Teilvorrichtung repräsentiert;
einen Codewert, der einen Rücklauf der Teilvorrichtung repräsentiert;
einen Codewert, der ein automatisches Scrollen der Teilvorrichtung repräsentiert;
einen Codewert, der eine Aktivierung der Teilvorrichtung repräsentiert;
einen Codewert, der eine Deaktivierung der Teilvorrichtung repräsentiert;
einen Codewert, der ein Geschlossen-Ein der Teilvorrichtung repräsentiert;
einen Codewert, der ein Geschlossen-Aus der Teilvorrichtung repräsentiert;
einen Codewert, der eine Zunahme der Teilvorrichtung repräsentiert; und
einen Codewert, der eine Abnahme der Teilvorrichtung repräsentiert.

9. Verfahren nach Anspruch 1, bei dem der Befehlsqualifizierer (450) einen der Codewerte "0E" bis "FF", die einen reservierten Bereich repräsentieren, als einen Codewert für einen Vorgang enthält, der in der Teilvorrichtung ausgeführt wird.

10. Verfahren nach Anspruch 1, bei dem der Codewert, der einen Vorgang der Teilvorrichtung repräsentiert, "50" ist.

11. Verfahren nach Anspruch 7, bei dem die Bestimmungsvorrichtungsidentität (460) einen der folgenden Codewerte umfasst:
einen Codewert, der ein MP3-Abspielgerät repräsentiert;
einen Codewert, der ein MPEG4-Dynamikbild-Abspielgerät repräsentiert;
einen Codewert, der einen TV-Empfänger repräsentiert;
einen Codewert, der einen Funkempfänger repräsentiert;
einen Codewert, der IrDa repräsentiert;
einen Codewert, der BlueTooth repräsentiert;
einen Codewert, der eine Digitalkamera repräsentiert;
einen Codewert, der einen Lautsprecher repräsentiert;
einen Codewert, der eine Haupt-LCD repräsentiert;
einen Codewert, der eine Teil-LCD repräsentiert; und
einen Codewert, der eine LED repräsentiert.

12. System, umfassend ein SIM (100) in Kommunikation mit einem Mobilgerät (110), wobei das Mobilgerät eine Teilvorrichtung hat, wobei:
das SIM dazu eingerichtet ist, Informationen zum Steuern der Teilvorrichtung des Mobilgerätes gemäß einem vorbestimmten Format zu codieren und einen proaktiven Befehl zu dem Mobilgerät zu senden (120),
das Mobilgerät dazu eingerichtet ist, in Erwiderung auf die Sendung des proaktiven Befehls zu bestimmen, ob der proaktive Befehl ein Befehl zum Steuern der Teilvorrichtung ist, und
das Mobilgerät weiterhin dazu eingerichtet ist, den proaktiven Befehl zu analysieren und die Teilvorrichtung gemäß einem Ergebnis, das man durch Analysieren des proaktiven Befehls erhält, wenn der proaktive Befehl der Befehl zum Steuern der Teilvorrichtung ist, zu betreiben
wobei der proaktive Befehl ein proaktives UICC-Befehlskennzeichen (400), eine Länge (410), Befehlsdetails (430) und Vorrichtungsidentitäten (440) umfasst, wobei die Befehlsdetails umfassen:
ein Befehlsdetailkennzeichen, das einen Detailbefehl für die Befehlsdetails des proaktiven Befehls repräsentiert;
eine Befehlszahl, die Identifikationszahlen repräsentiert, die für die Unterscheidung proaktiver Befehle verwendet werden, wenn die proaktiven Befehle gleichzeitig gesendet werden;
einen Befehlstyp (445), der einen Codewert enthält, der eine Tätigkeit einer Teilvorrichtung repräsentiert;
einen Befehlsqualifizierer (450), der eine Qualifikation für eine Tätigkeitssequenz zuweist, wobei der Befehlsqualifizierer einen Codewert zum Unterscheiden von Tätigkeiten enthält, die in einer Teilvorrichtung des Mobilgerätes ausgeführt werden; und
eine Länge, die eine Summe von Längen der Befehlszahl, den Befehlstyp und den Befehlsqualifizierer repräsentiert.

## Revendications

1. Procédé de contrôle d'un sous-dispositif d'un équipement mobile (110) à l'aide d'une boîte à outils d'applications SIM, soit Subscriber Identity Module, le procédé comprenant les étapes suivantes :
a) codage par une carte SIM (100) d'information pour contrôler le sous-dispositif de l'équipement mobile conformément à un format prédéterminé et pour transmettre (120) une commande proactive à l'équipement mobile ;
b) détermination par l'équipement mobile du fait que la commande proactive est ou non une commande pour contrôler le sous-dispositif en réponse à une transmission de la commande proactive ; et
c) analyse par l'équipement mobile de la commande proactive et mise en fonctionnement du sous-dispositif conformément à un résultat obtenu en analysant la commande proactive, lorsque la commande proactive est la commande pour contrôler le sous-dispositif,
dans lequel la commande proactive comprend une étiquette (400) de commande proactive de carte à circuit intégré universelle UICC, soit Universal Integrated Circuit Card, une longueur (410), des détails de commande (430) et des identités de dispositif (440), les détails de commande comprenant :
une étiquette de détails de commande représentant une commande de détail pour les détails de commande de la commande proactive ;
un numéro de commande représentant des numéros d'identification utilisés pour distinguer des commandes proactives lorsque les commandes proactives sont transmises simultanément ;
un type de commande (445) comprenant une valeur de code représentant le fonctionnement d'un sous-dispositif ;
un qualificateur de commande (450) qui assigne une qualification à une séquence de fonctionnement, le qualificateur de commande comprenant une valeur de code pour distinguer des opérations mises en oeuvre dans un sous-dispositif de l'équipement mobile ; et
une longueur représentant une somme de longueurs du numéro de commande, le type de commande et le qualificateur de commande.

2. Procédé selon la revendication 1, dans lequel l'étape b) comprend les étapes suivantes :
b1) entrée d'une étiquette de commande UICC proactive (400) qui indique que la commande est la commande proactive ;
b2) interprétation de l'information de la commande pour contrôler le sous-dispositif lorsque l'étiquette de commande UICC proactive est entrée ; et
b3) analyse de la commande de détail de la commande proactive conformément à l'information interprétée lorsque la commande est la commande pour commander le sous-dispositif.

3. Procédé selon la revendication 2, dans lequel l'étape (b2) comprend les étapes suivantes :
entrée d'une étiquette de détails de commande de la commande de détail ; et
interprétation d'éléments d'information de détail pour de l'information de contrôle du sous-dispositif lorsque l'étiquette de détails de commande est entrée.

4. Procédé selon la revendication 2, dans lequel l'étape (b2) comprend les étapes suivantes :
entrée d'une étiquette d'identités de dispositif de la commande de détail ; et
interprétation d'éléments d'information de détail pour que le sous-dispositif puisse fonctionner lorsque l'étiquette d'identités de dispositif est entrée.

5. Procédé selon la revendication 1, dans lequel la commande proactive comprend une étiquette de commande UICC proactive (400) qui indique que la commande reçue dans l'équipement mobile est une commande provenant de la SIM, une commande de détail de la commande, et une longueur (410) qui représente une longueur de la commande de détail.

6. Procédé selon la revendication 5, dans lequel la commande de détail comprend des détails de commande (430) et des identités de dispositif (440).

7. Procédé selon la revendication 1, dans lequel les identités de dispositif (440) comprennent :
une étiquette d'identités de dispositif représentant une commande de détail pour les identités du dispositif ;
une identité de dispositif source (455) représentant de l'information de source permettant à la commande proactive d'être transmise à un dispositif correspondant ;
une identité de dispositif de destination (460) représentant des numéros d'identification pour que le dispositif correspondant puisse fonctionner ; et
une longueur représentant la somme de longueurs de l'identité du dispositif source et de l'identité du dispositif de destination.

8. Procédé selon la revendication 1, dans lequel le qualificateur de commande (450) comprend une des valeurs de code suivantes :
une valeur de code représentant un allumage du sous-dispositif ;
une valeur de code représentant une extinction du sous-dispositif ;
une valeur de code représentant une lecture du sous-dispositif ;
une valeur de code représentant un arrêt du sous-dispositif ;
une valeur de code représentant un enregistrement du sous-dispositif ;
une valeur de code représentant une avance rapide du sous-dispositif ;
une valeur de code représentant un retour rapide du sous-dispositif ;
une valeur de code représentant un défilement automatique du sous-dispositif ;
une valeur de code représentant une activation du sous-dispositif ;
une valeur de code représentant une désactivation du sous-dispositif ;
une valeur de code représentant une mise sous tension du sous-dispositif ;
une valeur de code représentant une mise hors tension du sous-dispositif ;
une valeur de code représentant une augmentation du sous-dispositif ; et
une valeur de code représentant une diminution du sous-dispositif.

9. Procédé selon la revendication 1, dans lequel le qualificateur de commande (450) comprend une des valeurs de code 'OE' à 'FF' représentant une région réservée comme valeur de code pour une opération mise en oeuvre dans le sous-dispositif.

10. Procédé selon la revendication 1, dans lequel la valeur de code représentant un fonctionnement du sous-dispositif est '50'.

11. Procédé selon la revendication 7, dans lequel l'identité du dispositif de destination (460) comprend une valeur de code parmi :
une valeur de code représentant un lecteur MP3 ;
une valeur de code représentant un lecteur d'image dynamique MPEG4 ;
une valeur de code représentant un récepteur de télévision ;
une valeur de code représentant un récepteur radio ;
une valeur de code représentant un dispositif de transfert par infrarouge IrDA, soit Infrared Data Association ;
une valeur de code représentant un dispositif Bluetooth ;
une valeur de code représentant une caméra numérique ;
une valeur de code représentant un haut-parleur ;
une valeur de code représentant un écran principal à cristaux liquides LCD, soit Liquid Crystal Display ;
une valeur de code représentant un écran secondaire à cristaux liquides Sub-LCD ; et
une valeur de code représentant une diode électroluminescente LED, soit Light-Emitting Diode.

12. Système comprenant une carte SIM (100) en communication avec un équipement mobile (110), l'équipement mobile comportant un sous-dispositif, dans lequel :
la carte SIM est adaptée pour coder de l'information de contrôle du sous-dispositif de l'équipement mobile conformément à un format prédéterminé et pour transmettre (120) une commande proactive à l'équipement mobile,
l'équipement mobile est adapté pour déterminer si la commande proactive est ou non une commande pour contrôler le sous-dispositif en réponse à une transmission de la commande proactive,
l'équipement mobile est en outre adapté pour analyser la commande proactive et pour faire fonctionner le sous-dispositif conformément à un résultat obtenu en analysant la commande proactive, lorsque la commande proactive est la commande pour contrôler le sous-dispositif, et
dans lequel la commande proactive comprend une étiquette (400) de commande proactive de carte à circuit intégré universelle UICC, une longueur (410), des détails de commande (430) et des identités de dispositif (440), les détails de commande comprenant :
une étiquette de détails de commande représentant une commande de détail pour les détails de commande de la commande proactive ;
un numéro de commande représentant des numéros d'identification utilisés pour distinguer des commandes proactives lorsque les commandes proactives sont transmises simultanément ;
un type de commande (445) comprenant une valeur de code représentant le fonctionnement d'un sous-dispositif ;
un qualificateur de commande (450) qui assigne une qualification à une séquence de fonctionnement, le qualificateur de commande comprenant une valeur de code pour distinguer des opérations mises en oeuvre dans un sous-dispositif de l'équipement mobile ; et
une longueur représentant une somme de longueurs du numéro de commande, le type de commande et le qualificateur de commande.
